# EUROPEAN PATENT SPECIFICATION

(11) **EP 4 419 395 B1**
(45) Date of publication and mention of the grant of the patent: **23.07.2025**
(21) Application number: 22789245.2
(22) Date of filing: 20.10.2022
(51) Int. Cl.: B60R 19/18, B60R 19/26

(54) **BUMPER BEAM**
STOSSFÄNGERTRÄGER
POUTRE DE PARE-CHOCS

(30) Priority: 20.10.2021 EP 21203700
(43) Date of publication of application: 28.08.2024
(73) Proprietor: AUTOTECH ENGINEERING S.L., 48340 Amorebieta-Etxano, Bizkaia (ES)
(72) Inventor: ISAKSSON, Kenneth, 961 51 Boden (SE)
(74) Representative: Ehrner & Delmar Patentbyrå AB
(86) International application number: PCT/EP2022/079192
(87) International publication number: WO 2023/067054

(56) References cited:
- WO-A1-2007/084044
- WO-A1-2018/215194
- DE-A1- 102015 218 454

## Description

### TECHNICAL AREA

The present invention relates to a bumper beam to be attached to a white body of a vehicle. Specifically, the invention relates to a bumper beam with a patch arranged to provide a favourable deformation in the case of impact.

### BACKGROUND OF INVENTION

In the vehicle industry, there is always a focus on achieving high safety for the passengers as well as on weight reduction for improved fuel economy. These aspects are sometimes difficult to combine since increased safety often means thicker material and/or more complex designs of safety components such as bumpers. Conventional designs of bumper beam assemblies comprise a bumper beam attached to a vehicle by crash boxes. These crash boxes are designed to absorb a major part of impact energy, for instance in order to be able to handle so called Crash Repair Tests (CRT) which is an insurance requirement in Europe for low-speed impacts. These tests are designed such that a crash box and an attachment section of the bumper to the crash box, take up the majority of the impact. WO 2007/084044 A1 discloses a bumper beam comprising an elongate beam with a U-profile comprising a main portion extending along a longitudinal direction of the elongate beam and two webs extending longitudinally along opposite sides of the main portion configured to face a white body of a vehicle to which the elongate beam is configured to be attached.

A new solution that is configured to meet the aspects on safety for the passengers as well as on weight reduction for improved fuel economy is the so-called monoblock bumper beam developed by the applicant. This comprises an elongate beam with a specially designed profile as a single press hardened component made in so called advanced high strength steel, AHSS, that is bolted directly on a white body of a vehicle, rather than to use intermediate crash boxes. This solution has proven to work well for many impact tests such as the CRT where the webs of the monoblock beam absorb most of the impact energy. However, if the impact has an element of upward or downward forces, the bumper beam may have a tendency to asymmetric buckling, in which both webs fold in the same direction, either upwards or downwards.

A possible solution for providing a more stable and controlled buckling is to introduce additional inner reinforcements. However, these will add cost due to additional tools and assembly operations and removes the concept of a single press hardened component.

There is thus room for further improvements in the construction of bumper beams.

### BRIEF DESCRIPTION OF INVENTION

An object of the present invention is to improve the deformation properties of a bumper and in particular a monoblock bumper beam, i.e. a bumper comprised of a single component. This object is achieved with a bumper beam according to the independent claim. Alternative embodiments of the invention form the subject of the dependent claims.

According to a main aspect the invention relates to a bumper beam comprising an elongate beam with a U-profile comprising a main portion extending along a longitudinal direction of the elongate beam and two webs extending longitudinally along opposite sides of the main portion configured to face a white body of a vehicle to which the elongate beam is configured to be attached, wherein at least one patch is provided on at least one of the webs, said patch comprising an initiator positioned in a mid-section of the patch, the initiator being configured to, upon impact, initiate deformation of the web of the elongate beam on which it is provided.

The inventive bumper beam will, due to the provision of the initiator be prone to deform in a preferred manner upon impact, where mid portions of the webs deform away from each other so as to contribute a favourable distribution of the impact forces.

According to one feasible embodiment, a patch is provided on each of the webs, each patch comprising an initiator positioned in a mid-section thereof. This will provide a symmetric construction which will increase the tendency of the beam to deform in desired, symmetric manner.

In embodiments of the bumper beam, a patch is arranged to cover both the main portion and the web, wherein the initiators are positioned in areas of the patches that cover the webs. A large patch, instead of two or more smaller patches will simplify the forming of the bumper beam.

In embodiments of the bumper beam, the elongate beam is provided with two mutually separated attachment sections at outer portions of the webs for attachment to the white body of the vehicle, wherein the patches are provided on a portion of the webs adjacent to the attachment sections.

According to the invention, the initiators are comprised of weakened portions in the patches extending in the longitudinal direction of the elongate beam so as to initiate a deformation by a longitudinal folding along the web on which they are provided.

In embodiments of the bumper beam, the initiators include one or more cut-outs in the patches.

In embodiments of the bumper beam, the patches are arranged on inner surfaces of the elongate beam.

According to the invention, the initiators are configured to extend along a longitudinal portion of the webs, to initiate longitudinal deformation along the webs of the bumper beam.

In embodiments of the bumper beam, the initiators are configured to provide an outward deformation longitudinally along the web.

In embodiments of the bumper beam, the elongate beam is configured to be softer in local areas of the webs than in the rest of the beam, which local areas correspond to the position of the initiators.

Specifically, the local areas with softer material may be obtained by single surface cooling in a forming die.

In embodiments, the beam and the patches are jointly formed in a hot-forming and press-hardening process and are jointly cooled in a forming die.

In embodiments, the beam is made from an advanced high strength steel (AHSS) material

The above and other aspects and advantages of the present invention will become apparent from the following detailed description of the invention and from the accompanying drawings.

### BRIEF DESCRIPTION OF DRAWINGS

In the following detailed description of the invention, reference will be made to the accompanying drawings, of which
- Fig. 1: is a perspective view of a monoblock bumper beam with patches according to the invention,
- Fig. 2: is a cross-sectional view of the deformation behaviour of the beam and patch upon impact, and
- Fig. 3: is a schematic view of the cooling of a beam and patch in a forming die.

### DETAILED DESCRIPTION OF THE INVENTION

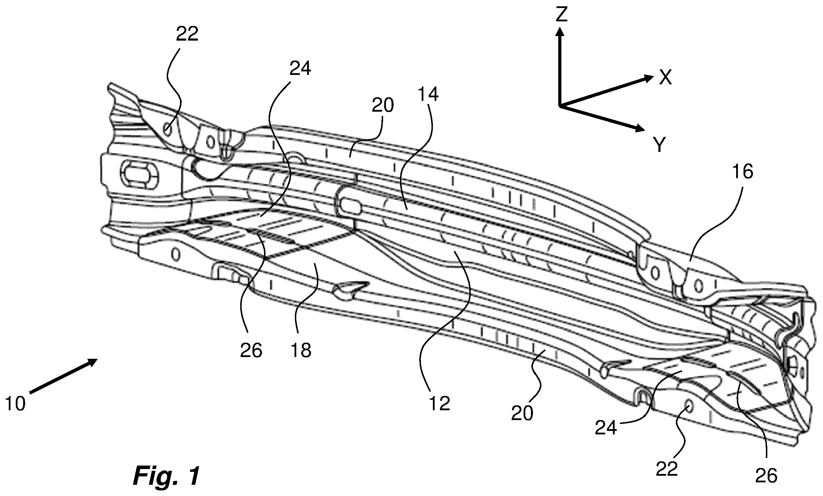

Fig. 1 shows a bumper beam 10 provided with an elongate body with U-shaped cross-sectional structure, specifically a hat-shaped cross-sectional structure. As illustrated in Fig. 1, the bumper beam 10 is configured to be arranged on a vehicle extending in the illustrated X-direction, the vehicle also being configured to be driven in the X-direction. The bumper beam 10 extends longitudinally in the Y-direction, which extend laterally and is orthogonal to the X-direction.

The profile of the elongate body of the bumper beam 10 may be substantially hat shaped and substantially symmetric both in the longitudinal Y-direction and the vertical Z-direction. The beam 10 comprises a main portion 12 that extends in the Y-direction and may be provided with a semi-circular groove 14 running along the length of main portion 12 of the elongate beam 10. The main portion 12 is connected to two webs, an upper web 16 and a lower web 18, on opposite sides of the main portion 12 in the vertical Z-direction, above and below the main portion 12, respectively. The webs 16, 18 are arranged to extend inwards in the X-direction, towards a vehicle body of the vehicle on which the bumper beam 10 is arranged.

At the outer ends of the webs 16, 18, to complete a hat-profile, outwardly directed flanges 20 are arranged to extend in the Z-direction along the length of the bumper beam 10. The flanges 20 are provided with attachment section 22 that may comprise screw holes to attach the elongate beam 10 directly to a white body of a vehicle. In the area adjacent the attachment sections 22 of the elongate beam 10, patches 24 are arranged to strengthen these portions of the elongate beam, and specifically of the webs 16, 18. Preferably, the patches 24 are provided on the inner surface of the elongate beam 10 as illustrated in Fig. 1. The patches 24 have the same profiled structures as the areas of the beam 10 to which they are attached.

The patches 24 are provided with initiators 26, typically in the form of geometrical triggers at certain pre-determined locations to control deformation at impact. These initiators 26 consist of weakened portions and may be comprised of cut-outs in the patches 24 in areas where controlled deformation initiation of the beam is desired. The initiators 26 are hence provided to obtain a controlled deformation upon impact. The initiators 26 are positioned in connection with one or both webs 16, 18. In the embodiment shown in Fig. 1 the initiators 26 are formed as elongate slits that are positioned about halfway along the extension of the webs 16, 18 in the X-direction.

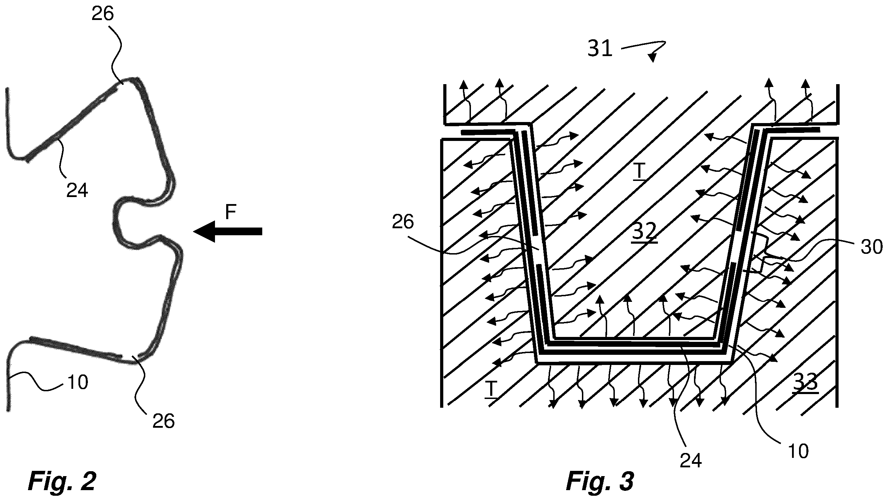

As illustrated in Fig. 2, the initiators 26 of this sort will initiate a deformation of the bumper beam 10 upon impact such that the beam 10 will be bent and buckled in a controlled manner when a force along the X-direction is exerted on the bumper beam 10, reducing the risk of the beam collapsing upwards or downwards. Instead, as is illustrated in Fig. 2, the upper web 16 will bend upwards at the initiator 26 provided along the upper web 16, and the lower web 18 will bend downwards at the initiator 26 provided along the lower web 18.

The initiators 26 are hence configured to provide an outward longitudinal deformation along the webs 16, 18. In this regard, it may be favourable if the patches 24 are provided with symmetric initiators 26 so that the webs 16 and 18 are buckled in the same way, away from each other.

As a further development of the initiators 26, the patches 24 may be processed during the forming of the beam 10 and the patches 24. For instance, single contact cooling may be performed on certain areas adjacent the cut-outs of the triggers.

Fig. 3 schematically shows a manner of achieving a single contact cooling of the hot formed part having a temperature of about 900 °C in a forming die 31 comprised of male part 32 and a female part 33 which are held at a temperature T below 200 °C so as to provide a cooling to the bumper beam 10 and an attached patch 24. In the area of the initiator 26, contact with the tool is provided on only one side, i.e., only the bumper beam 10 is in contact with the tool. On the other side, an air gap is formed by the cut-out of the initiator 26, which negatively affects the heat transport (indicated by the arrows in Fig. 3) and thereby the cooling rate. The locally inhibited cooling rate at a local area 30 may affect the forming of martensite in the material of the beam in this local area 30. Instead of Martensite, other phases may be formed in this local area 30, which typically provide softer material in this local area 30 with lower strength but with higher ductility.

Higher ductility implies that the material may be stretched more without breaking and lower strength implies that the webs of the beam will have a higher tendency of bending in such a local area 30, thus cooperating with the initiators 26. Further, the joint forming of the beam and the patches 24 in a hot-forming die will not necessitate any additional tools or production steps. The initiators 26 may also have other shapes and/or configurations that will provide a deformation initiation and enable a bending at predetermined areas. For instance, the initiators 26 may instead of slits be comprised of one or more depressions, a row of holes or the like stamped in the patches 24.

In a specific embodiment of the bumper beam, the webs 16 and 18 of the elongate beam 10 may include a slight bend at the local areas 30, providing a horse shoe-like shape to the beam, which could further induce a proneness towards bending in said local areas 30.

It is to be understood that the embodiment described above and shown in the drawings is to be regarded only as a non-limiting example of the invention and that it may be modified in many ways within the scope of the claims.

## Claims

1. A bumper beam comprising an elongate beam (10) with a U-profile comprising a main portion (12) extending along a longitudinal direction of the elongate beam (10) and two webs (16, 18) extending longitudinally along opposite sides of the main portion (12) configured to face a white body of a vehicle to which the elongate beam (10) is configured to be attached, **characterised in that** a at least one patch (24) is provided on at least one of the webs (16, 18), said patch (24) comprising an initiator (26) positioned in a mid-section of the patch (24), the initiator (26) being configured to, upon impact, initiate deformation of the web (16, 18) of the elongate beam (10) on which it is provided, wherein the initiators (26) are comprised of weakened portions in the patches (24) and extend in the longitudinal direction of the elongate beam (10) so as to initiate a deformation by a longitudinal folding along the web (16, 18) on which they are provided.

2. The bumper beam according to claim 1, wherein patches (24) are provided on each of the webs (16, 18), each patch (24) comprising an initiator (26) positioned in a mid-section thereof.

3. The bumper beam according to claim 1, wherein patches (24) are arranged to cover the main portion (12) as well as both webs (16, 18), and wherein the initiators (26) are positioned in areas of the patches (24) that cover the webs (16, 18).

4. The bumper beam according to any one of the preceding claims, wherein the elongate beam (10) is provided with two mutually separated attachment sections (22) at outer portions (20) of the webs (16, 18) for attachment to the white body of the vehicle, and wherein the patches (24) are provided on a portion of the webs (16, 18) adjacent to said attachment sections (22).

5. The bumper beam according to any one of the preceding claims, wherein the initiators (6) include one or more cut-outs in the patches (24).

6. The bumper beam according to any one of the preceding claims, wherein the patches (24) are arranged on inner surfaces of the elongate beam (10).

7. The bumper beam according to any one of the preceding claims, wherein the initiators (26) are configured to provide an outward deformation longitudinally along the webs (16, 18).

8. The bumper beam according to any one of the preceding claims, wherein the elongate beam (10) is configured to be softer in local areas (30) of the webs (16, 18) corresponding to the position of the initiators (26) than in the rest of the beam (10).

9. The bumper beam according to claim 8, wherein the local areas (30) with softer material is obtained by single surface cooling in a forming die (31).

10. The bumper beam according to any one of the preceding claims, wherein the beam (10) and the patches (24) are jointly formed in a hot-forming and press-hardening process and are jointly cooled in a forming die (31).

11. The bumper beam according to any one of the preceding claims, wherein the beam (10) is made from an advanced high strength steel (AHSS) material.

## Patentansprüche

1. Stoßfängerträger, der einen länglichen Träger (10) mit einem U-Profil umfasst, das einen Hauptabschnitt (12), der sich entlang einer Längsrichtung des länglichen Trägers (10) erstreckt, und zwei Stege (16, 18) umfasst, die sich in Längsrichtung entlang gegenüberliegender Seiten des Hauptabschnitts (12) erstrecken und dazu ausgestaltet sind, einer Rohkarosserie eines Fahrzeugs, an dem der längliche Träger (10) zur Befestigung ausgestaltet ist, zugewandt zu sein, **dadurch gekennzeichnet, dass** mindestens ein Patch (24) auf mindestens einem der Stege (16, 18) bereitgestellt ist, wobei das Patch (24) einen Initiator (26) umfasst, der in einem mittleren Abschnitt des Patch (24) positioniert ist, wobei der Initiator (26) dazu ausgestaltet ist, bei einem Aufprall eine Deformation des Stegs (16, 18) des länglichen Trägers (10), auf dem er bereitgestellt ist, einzuleiten, wobei die Initiatoren (26) aus geschwächten Abschnitten in den Patches (24) bestehen und sich in Längsrichtung des länglichen Trägers (10) erstrecken, um eine Deformation durch Längsfalten entlang des Stegs (16, 18), auf dem sie vorgesehen sind, zu initiieren.

2. Stoßfängerträger nach Anspruch 1, wobei Patches (24) auf jedem der Stege (16, 18) vorgesehen sind, wobei jedes Patch (24) einen in einem mittleren Abschnitt davon positionierten Initiator (26) umfasst.

3. Stoßfängerträger nach Anspruch 1, wobei Patches (24) zum Abdecken des Hauptabschnitts (12) sowie beider Stege (16, 18) angeordnet sind und wobei die Initiatoren (26) in Bereichen der Patches (24) positioniert sind, die die Stege (16, 18) abdecken.

4. Stoßfängerträger nach einem der vorhergehenden Ansprüche, wobei der längliche Träger (10) mit zwei voneinander getrennten Befestigungssektionen (22) an äußeren Abschnitten (20) der Stege (16, 18) zur Befestigung an der Rohkarosserie des Fahrzeugs versehen ist und wobei die Patches (24) an einem den Befestigungssektionen (22) benachbarten Abschnitt der Stege (16, 18) vorgesehen sind.

5. Stoßfängerträger nach einem der vorhergehenden Ansprüche, wobei die Initiatoren (6) einen oder mehrere Ausschnitte in den Patches (24) aufweisen.

6. Stoßfängerträger nach einem der vorhergehenden Ansprüche, wobei die Patches (24) an Innenflächen des länglichen Trägers (10) angeordnet sind.

7. Stoßfängerträger nach einem der vorhergehenden Ansprüche, wobei die Initiatoren (26) dazu ausgestaltet sind, eine Auswärtsdeformation in Längsrichtung entlang der Stege (16, 18) bereitzustellen.

8. Stoßfängerträger nach einem der vorhergehenden Ansprüche, wobei der längliche Träger (10) so ausgestaltet ist, dass er in örtlichen Bereichen (30) der Stege (16, 18), die der Position der Initiatoren (26) entsprechen, weicher ist als in dem Rest des Trägers (10) .

9. Stoßfängerträger nach Anspruch 8, wobei die örtlichen Bereiche (30) mit weicherem Material durch Einzelflächenkühlung in einem Formwerkzeug (31) erhalten werden.

10. Stoßfängerträger nach einem der vorhergehenden Ansprüche, wobei der Träger (10) und die Patches (24) gemeinsam in einem Warmumformungs- und Presshärtungsprozess ausgebildet und gemeinsam in einem Formwerkzeug (31) gekühlt werden.

11. Stoßfängerträger nach einem der vorhergehenden Ansprüche, wobei der Träger (10) aus einem AHSS-Material hergestellt ist.

## Revendications

1. Poutre de pare-chocs comprenant une poutre allongée (10) avec un profil en U comprenant une partie principale (12) s'étendant le long d'une direction longitudinale de la poutre allongée (10) et deux âmes (16, 18) s'étendant longitudinalement le long de côtés opposés de la partie principale (12) conçue pour faire face à une carrosserie blanche d'un véhicule auquel la poutre allongée (10) est conçue pour être fixée, **caractérisée en ce qu'**au moins une plaque (24) est disposée sur au moins une des âmes (16, 18), ladite plaque (24) comprenant un initiateur (26) positionné dans une section médiane de la plaque (24), l'initiateur (26) étant conçu pour, lors de l'impact, amorcer la déformation de l'âme (16, 18) de la poutre allongée (10) sur laquelle il est placé, les initiateurs (26) étant constitués de parties affaiblies dans les plaques (24) et s'étendant dans la direction longitudinale de la poutre allongée (10) de sorte à amorcer une déformation par un pliage longitudinal le long de l'âme (16, 18) sur laquelle ils sont disposés.

2. Poutre de pare-chocs selon la revendication 1, des plaques (24) étant disposées sur chacune des âmes (16, 18), chaque plaque (24) comprenant un initiateur (26) positionné dans une section médiane de celle-ci.

3. Poutre de pare-chocs selon la revendication 1, des plaques (24) étant disposées pour couvrir la partie principale (12) ainsi que les deux âmes (16, 18), et les initiateurs (26) étant positionnés dans des zones des plaques (24) qui couvrent les âmes (16, 18).

4. Poutre de pare-chocs selon l'une quelconque des revendications précédentes, la poutre allongée (10) étant pourvue de deux sections de fixation (22) mutuellement séparées au niveau de parties extérieures (20) des âmes (16, 18) pour la fixation à la carrosserie blanche du véhicule, et les plaques (24) étant disposées sur une partie des âmes (16, 18) adjacente auxdites sections de fixation (22) .

5. Poutre de pare-chocs selon l'une quelconque des revendications précédentes, les initiateurs (6) comprenant une ou plusieurs découpes dans les plaques (24).

6. Poutre de pare-chocs selon l'une quelconque des revendications précédentes, les plaques (24) étant disposées sur des surfaces intérieures de la poutre allongée (10).

7. Poutre de pare-chocs selon l'une quelconque des revendications précédentes, les initiateurs (26) étant conçus pour fournir une déformation vers l'extérieur longitudinalement le long des âmes (16, 18).

8. Poutre de pare-chocs selon l'une quelconque des revendications précédentes, la poutre allongée (10) étant conçue pour être plus molle dans des zones locales (30) des âmes (16, 18) correspondant à la position des initiateurs (26) que dans le reste de la poutre (10).

9. Poutre de pare-chocs selon la revendication 8, les zones locales (30) en un matériau plus mou étant obtenues par refroidissement de surface unique dans une matrice de formage (31).

10. Poutre de pare-chocs selon l'une quelconque des revendications précédentes, la poutre (10) et les plaques (24) étant formées conjointement dans un procédé de formage à chaud et de trempe sous pression et étant refroidies conjointement dans une matrice de formage (31).

11. Poutre de pare-chocs selon l'une quelconque des revendications précédentes, la poutre (10) étant en un matériau en acier avancé à haute résistance (AHSS).
